# EUROPÄISCHE PATENTANMELDUNG

(11) **EP 2 476 925 A1**
(43) Veröffentlichungstag der Anmeldung: **18.07.2012**
(21) Anmeldenummer: 11150759.6
(22) Anmeldetag: 12.01.2011
(51) Int. Cl.: F16C 33/44, F16C 33/38

(54) **Wälzlagerkäfig teilweise bestehend aus Faserverbundwerkstoff mit Endlosfasern**

(71) Anmelder: Groz-Beckert KG, 72458 Albstadt (DE)
(72) Erfinder: Bischoff, Dr. Thomas, 21614 Buxtehude (DE)
(74) Vertreter: Rüger, Barthelt & Abel

(57) **Zusammenfassung**

Der erfindungsgemäße Wälzkörperkäfig besteht aus wenigstens zwei verschiedenen Materialien, nämlich zum einen einem Faserverbundmaterial und zum anderen aus einem Kunststoff, der keine oder andere Fasern enthält. Die Faserverbundabschnitte (18, 19) haben vorzugsweise Endlosfasern. Sofern die Kunststoffabschnitte Fasern enthalten, sind dies vorzugsweise Kurzfasern. Wenn die in den Faserverbundteilen untergebrachten Fasern abrasiv sind, sind solche Fasern in den Kunststoffabschnitten vorzugsweise nicht vorhanden.

Die erfindungsgemäßen Wälzkörperkäfige (17) sind für einen verschleißarmen Betrieb in einem weiten Temperaturbereich eingerichtet.

## Beschreibung

Die Erfindung betrifft einen Wälzkörperkäfig für Wälzlager.

Wälzlager umfassen grundsätzlich eine Anzahl von Wälzkörpern, die zumindest bei einigen Anwendungsfällen in einem Wälzlagerkäfig gehalten sind. Dieser hat die Aufgabe, die Wälzkörper zu distanzieren und deren gegenseitige Berührung zu verhindern.

Es ist grundsätzlich bekannt, den Käfig aus Metall oder auch aus Kunststoffmaterial auszubilden. Dazu schlägt zum Beispiel die DE 103 51 346 vor, den Wälzlagerkäfig aus einer Matrix, zum Beispiel aus Epoxidharz, aufzubauen, in das eine Verstärkung in Gestalt eines Gewebes oder Vlieses aus Polyamidfasern eingebettet ist. Die Fasern dienen der Erbringung von Notlaufeigenschaften, was in ihrer Materialwahl begründet ist. Die Fasern können dazu z.B. Schmiermittel aufnehmen.

Die DE 10 2004 058 518 A1 schlägt ebenfalls einen Wälzlagerkäfig aus einem Verbundmaterial vor. Der Kunststoff ist mit einem Additiv versehen, der den Reibwert vermindern soll. Als Additiv wird ein Festschmierstoff, wie beispielsweise ein Fluorpolymer, vorgeschlagen.

Die DE 10 2008 027 764 A1 schlägt zum Aufbau von besonders hochtourigen Lagern Wälzlagerkäfige vor, die aus Epoxidharz und Ramie-Fasern aufgebaut sind. Es handelt sich dabei um leinenähnliche Bastfasern, die zur Verminderung der Reibung und zur Aufnahme von Öl dienen.

Schließlich schlägt die JP 2006-300257 A ein Wälzlager mit einem Käfig vor, der aus einem Verbundmaterial besteht. Dieses Verbundmaterial wird durch eine Harzmatrix mit eingebetteten Karbon-Nanoröhrchen gebildet. Diese haben eine sehr gute Wärmeleitfähigkeit, die zur der Lagerkühlung genutzt wird.

Bei größeren Lagern macht sich die insbesondere bei manchen Verbundmaterialien gegebene Wärmedehnung oder auch Quellung und Schrumpfung infolge Feuchtigkeitsaufnahme bemerkbar. Führt die wärme- oder feuchtigkeitsbedingte Ausdehnung oder Schrumpfung nur zu Längenänderungen des Wälzlagerkäfigs im Prozentbereich, kann das bei einem Lager mit einer Länge oder einem Durchmesser von einem oder mehreren Metern schon zu einigen Zentimetern Längenänderung führen. Diese Längenänderungen sind häufig unerwünscht. Sie können die Einbaufähigkeit beeinträchtigen, zu erhöhter Reibung, zur Verspannung, zu erhöhten Verschleiß oder auch zu sonstigen negativen Eigenschaften, beispielsweise Geräuschentwicklung, führen.

Außerdem stellt sich bei Wälzlagerkäfigen aus Faserverbundmaterialen besonders die Problematik der Vermeidung von abrasivem Verschleiß der Wälzkörper. Glasfasern und Kohlenstofffasern sind als abrasiv bekannt. Sie dürfen keinesfalls die Wälzkörper schädigen. Andererseits sind sowohl Glasfasern wie auch Kohlenstofffasern und andere Mineralfasern exzellent dazu geeignet, Faserverbundteile mit hohen Festigkeitswerten aufzubauen. Für Wälzlagerkäfige können zudem hohe Festigkeitswerte gefordert werden.

Davon ausgehend ist es Aufgabe der Erfindung, ein Wälzlager mit einem Wälzlagerkäfig zu schaffen, der einerseits eine hohe Festigkeit aufweist, andererseits aber auch hohe Anforderungen hinsichtlich thermischer oder feuchtigkeitsbedingter Einflüsse genügt und eine lange Standzeit des Wälzlagers ermöglicht.

Diese Aufgabe wird mit dem Wälzlager nach Anspruch 1 gelöst. Das Verfahren nach Anspruch 15 gestattet die Erzeugung eines Wälzlagerkäfigs, der den gestellten Anforderungen genügt.

Der erfindungsgemäße Wälzkörperkäfig weist mindestens einen, vorzugsweise mehrere Faserverbundabschnitte auf, der bzw. die aus einem faserverstärkten Kunststoffmaterial bestehen. Weiter sind mindestens ein Kunststoffabschnitt, vorzugsweise mehrere Kunststoffabschnitte vorhanden, die mit dem Faserverbundabschnitt verbunden sind.

Dieses Konzept gestattet es, die Eigenschaften des Faserverbundabschnitts und des Kunststoffabschnitts jeweils optimal auf die ihm zuzuweisenden Aufgabe abzustimmen. Beispielsweise kann der Faserverbundabschnitt länglich ausgebildet und so angeordnet werden, dass er sich in der Längsrichtung des Wälzkörperkäfigs erstreckt. Die Längsrichtung wird durch die Reihe der hintereinander angeordneten Wälzkörper definiert. Hingegen kann der Kunststoffabschnitt so ausgebildet sein, dass er fest mit dem Faserverbundabschnitt verbunden ist oder diesen zumindest teilweise einhüllt bzw. umgreift. Die Kunststoffabschnitte können Stege bilden, die zwischen die Wälzkörper greifen. Zwischen den Kunststoffabschnitten können Aussparungen gebildet sein, in denen die Wälzkörper sitzen. Es ist möglich, diese Aussparungen oder Taschen in Längsrichtung durch die Kunststoffabschnitte zu begrenzen während sie in Seitenrichtung von den Faserverbundabschnitten begrenzt sind. Die Hauptreiblast besteht zwischen den Kunststoffabschnitten und den Wälzkörpern. Hier können sich die Wälzkörper und die Kunststoffabschnitte berühren. Die Kunststoffabschnitte können hinsichtlich der Materialwahl optimal auf diese Aufgabe abgestimmt sein. Beispielsweise kann ein faserfreier Kunststoff zur Anwendung kommen. Es ist auch möglich, Kunststoffe zu wählen, die mit den Wälzkörpern eine günstige Reibpaarung bilden. Auch kann der Kunststoffkörper mit reibungsmindernden Partikeln gefüllt sein. Diese Partikel können die Form von Körnern, Flitter oder auch Fasern haben. Es kann sich um Naturfasern oder Kunstfasern handeln. Ebenso kann der Kunststoff der Kunststoffabschnitte Notschmiereigenschaften haben und mit flüssigen und/oder festen Schmiermitteln, beispielsweise Graphit, Talkum oder dergleichen, gefüllt sein.

Vorzugsweise besteht zwischen den Wälzkörpern und dem Faserverbundabschnitt ein Abstand, der bei Betrieb des Wälzlagers bestehen bleibt. Damit kann der Faserverbundabschnitt hinsichtlich anderer Eigenschaften optimiert werden als der Kunststoffabschnitt. Zum Beispiel kann der Faserverbundabschnitt hinsichtlich des thermischen linearen Ausdehnungskoeffizienten oder hinsichtlich der Ausdehnung infolge Feuchtigkeitseinwirkung optimiert werden. Es können als Fasern für den Faserverbundabschnitt mineralische Fasern, Glasfasern, Kohlenstofffasern oder ähnliches Anwendung finden. Mit Kohlenstofffasern lässt sich ein besonders niedriger thermischer Ausdehnungskoeffizient erreichen. Wegen des bestehen bleibenden Abstands zwischen den Wälzkörpern und den Faserverbundabschnitten kann abrasiver Verschleiß der Wälzkörper minimiert oder unterbunden werden.

Vorzugsweise sind die Fasern in Längsrichtung des Wälzkörperkäfigs orientiert. Die Fasern sind vorzugsweise in eine Kunststoffmatrix eingebettet. Es können Fasergemische Anwendung finden, wobei auch Fasern die mit dem Kunststoff der Kunststoffmatrix verschweißen oder verkleben, vorgesehen sein können. Es ist auch möglich, Fasern aus einem Kunststoff vorzusehen, der mit dem Kunststoff der Matrix übereinstimmt, so dass eine optimale Einhüllung und Umhüllung der anderen Fasern des Fasergemisches erfolgt.

Sofern als Fasern Endlosfasern zum Einsatz kommen, handelt es sich um Fasern, deren Länge größer ist als der Umfang des Lagers oder dessen Länge. Falls es sich um ein Linearlager handelt. Vorzugsweise übersteigt die Länge einer solchen "Endlosfaser" ein Mehrfaches des Lagerumfangs bzw. der Lagerlänge.

Der Wälzkörperkäfig kann als linearer Käfig für Linearlager, als linearer Käfig, der im Gebrauch zu einem Ring geformt wird oder auch als geschlossener Ring ausgebildet sein. Vorzugsweise wird der Faserverbundabschnitt in Endlosfertigung als lineares Element hergestellt, das dann in Abschnitten oder auch in fortlaufender Fertigung mit den Kunststoffabschnitten versehen wird. Der Querschnitt des Faserverbundabschnitts kann rund, quadratisch, rechteckig oder anderweitig geformt sein. Es ist insbesondere möglich, den Faserverbundabschnitt in Form eines Bands auszubilden. Die Kunststoffabschnitte sind vorzugsweise so geformt, dass sie die Wälzkörper spielarm zwischen einander fassen, d.h. passende Taschen bilden. Vorzugsweise sind die Kunststoffabschnitte dabei so ausgebildet, dass die Wälzkörper in den Wälzkörperkäfig eingerastet unverlierbar gehalten sind.

Weitere Einzelheiten vorteilhafter Details von Ausführungsformen sind Gegenstand der Zeichnung, der Beschreibung oder von Ansprüchen. Es zeigen:
Figur 1 ein Wälzlager mit einem erfindungsgemäßen Wälzkörperkäfig als lineares Lager, in ausschnittsweiser Seitenansicht,
Figur 2 ein Wälzlager für Drehbewegungen mit einem erfindungsgemäßen Wälzkörperkäfig, in Seitenansicht,
Figur 3 einen Wälzkörperkäfig mit Wälzkörpern, in Draufsicht,
Figur 4 das Wälzlager nach Figur 2, in ausschnittsweise Radikalschnittansicht,
Figur 5 einen Wälzkörperkäfig mit darin gefangenem Wälzkörper, in ausschnittsweiser perspektivischer Darstellung und
Figur 6 den Wälzkörperkäfig nach Figur 4 in einer ausschnittsweisen vergrößerten Ansicht.

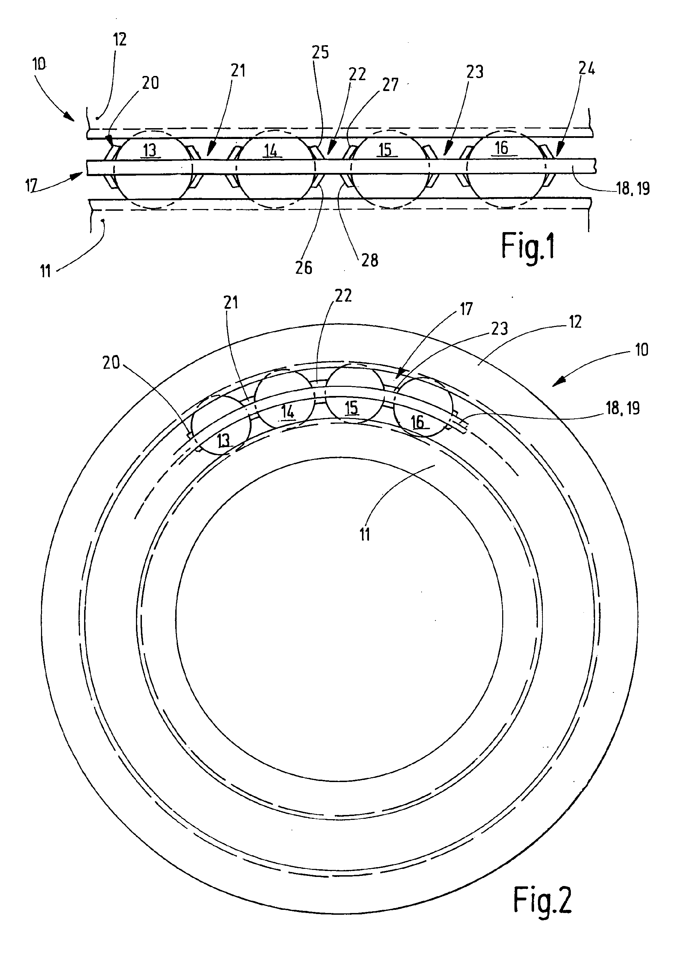

In Figur 1 ist ein lineares Wälzlager 10 veranschaulicht, das zwei Laufbahnen 11, 12 aufweist. Zwischen diesen sind Wälzkörper 13, 14, 15, 16 angeordnet, um eine Laufbahn 12 rollend an der anderen Laufbahn 11 abzustützen. Die Wälzkörper 13 - 16 sind im vorliegenden Ausführungsbeispiel Kugeln. Die Wälzkörper 13 - 16 können jedoch auch andere geeignete Formen, z.B. Zylinderform, Tonnenform, Kegelstumpfform, Nadelform oder eine sonstige für Wälzkörper geeignete Form haben.

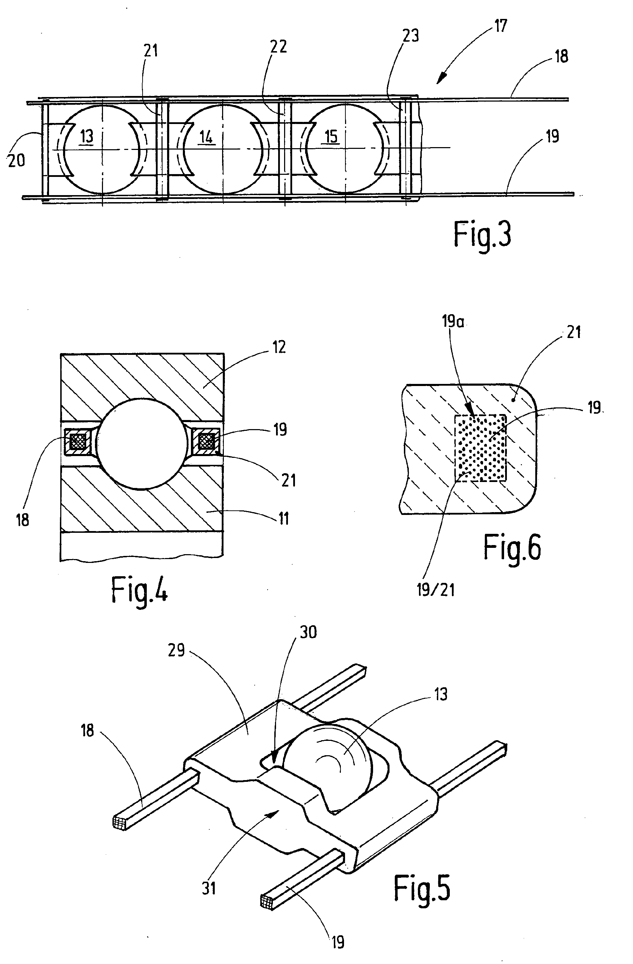

Die Wälzkörper 13 - 16 (sowie weitere nicht dargestellte Wälzkörper) sind in einem Wälzkörperkäfig 17 gehalten. Dieser umfasst mindestens einen, vorzugsweise zwei Faserverbundabschnitte 18, 19, die sich entlang der von den Wälzkörpern 13, 14, 15 usw. gebildeten Reihe erstrecken. Figur 3 veranschaulicht dies. Die beiden Faserverbundabschnitte 18, 19 können einen rechteckigen Querschnitt aufweisen, wie es die Figuren 4 - 6 zeigen. Sie können aber auch andere Querschnittformen, beispielsweise rund, oval, rechteckig, dreieckig, polygonal o.ä. aufweisen.

Die beiden länglichen Faserverbundabschnitte 18, 19 erstrecken sich vorzugsweise parallel zueinander zu beiden Seiten der Reihe der Wälzkörper 13, 14, 15, 16. Der Querschnitt der Faserverbundabschnitte 18, 19 ist entlang der Länge derselben vorzugsweise unverändert. Er kann aber auch wechseln, wenn dies gewünscht ist.

Der Wälzkörperkäfig 17 weist mindestens einen vorzugsweise aber eine Anzahl Kunststoffabschnitte 20 - 24 auf, die zwischen die Wälzkörper 13, 14, 15, greifen und diese auf Abstand halten (siehe Figur 1 und 3). Auch können die Kunststoffabschnitte zwei oder, bei z.B. mehrreihigen Lagern, mehrere Faserverbundabschnitte 18, 19 untereinander verbinden.

Die Kunststoffabschnitte 20 - 24 bestehen vorzugsweise aus einem hinsichtlich der Gleiteigenschaften und Verschleißeigenschaften optimierten Kunststoff, wie beispielsweise Epoxidharz oder vorzugsweise einen thermoplastischen, im Spritzgieß- oder Spritzpressverfahren verarbeitbaren Kunststoff. Dieser Kunststoff kann als homogene Masse ausgebildet sein. Er kann auch Einbettungen enthalten, wie beispielsweise Partikel, Plättchen, Fasern, Blasen, Tröpfchen oder dergleichen. Diese Einbettungen sind vorzugsweise hinsichtlich einer Optimierung der Gleiteigenschaften und Verschleißeigenschaften ausgewählt. Es kann sich um Naturfasern oder Kunstfasern, Graphitpartikel, Öl o.ä. handeln.

Die Faserverbundabschnitte 18, 19 enthalten vorzugsweise besonders zugfeste Fasern mit geringem Temperatur- und Feuchtedehnungskoeffizienten, wie Glasfasern oder insbesondere Aramid- oder Kohlenstofffasern. Diese erstrecken sich jeweils in Längsrichtung des jeweiligen Kunststoffabschnitts. Die Fasern können als gerade Fasern beispielsweise als Rovings oder gedrehte bzw. ungedrehte Filamentgarne in die Kunststoffmatrix des jeweiligen Faserverbundabschnitts 18, 19 eingearbeitet sein. Es können auch verseilte oder verzwirnte Fasern Anwendung finden. Es können Fasergemische aus verschiedenen Fasern und/oder Fasermaterialien Anwendung finden. Ihre Mischung kann beispielsweise so abgestimmt werden, dass sich für den Faserverbundabschnitt ein Ausdehnungskoeffizient ergibt, der beispielsweise dem der Laufbahnen 11, 12 (z.B. Stahl) angepasst ist.

Die Faserverbundabschnitte 18, 19 weisen eine Kunststoffmatrix auf, deren Kunststoff mit dem Kunststoff der Kunststoffabschnitte 20 - 24 verträglich ist. Insbesondere können die Kunststoffe der Kunststoffabschnitte 20 - 24 und der Faserverbundabschnitte 18, 19 miteinander verklebt oder verschweißt werden. Werden die Kunststoffabschnitte 20 - 24 im Kunststoffspritzverfahren hergestellt, erfolgt vorzugsweise ein Verschmelzung der Kunststoffabschnitte 20 - 24 mit dem Kunststoff der Faserverbundabschnitte 18, 19. Figur 6 zeigt eine solche Situation. Der Kunststoffabschnitt 21 umgreift den Faserverbundabschnitt 19. An der gestrichelt eingetragenen Nahtfläche 19/21 ist das Kunststoffmaterial des Faserverbundabschnitts 19 mit dem Kunststoffmaterial des Kunststoffabschnitts verschmolzen, verschweißt oder verklebt. Sie sind somit stoffschlüssig miteinander verbunden. Zusätzlich können sie durch das erwähnte Umgreifen formschlüssig miteinander verbunden sein. Figur 6 zeigt auch die in dem Faserverbundabschnitt vorgesehenen Fasern 19a. Es kann sich dabei um organische Fasern und/oder mineralische Fasern, insbesondere Glasfasern, Kohlenstofffasern oder ähnliches handeln. Auch ein Fasergemisch kann vorgesehen sein. Insbesondere kann das Fasergemisch Kunststofffasern aus einem Kunststoff enthalten, der mit dem Kunststoff der umgebenden Kunststoffmatrix übereinstimmt oder mit diesem insoweit verträglich ist, als er mit ihm thermisch verkleben oder verschmelzen kann.

Es ist aber auch möglich, die Nahtfläche 19/21 als Grenzfläche ohne stoffliche Verbindung zwischen den Kunststoffmaterialien des Faserverbundabschnitts 19 und des Kunststoffabschnitts 21 auszubilden. Die beiden Abschnitte sind dann lediglich formschlüssig miteinander verbunden.

Wie Figur 3 zeigt, können die Faserverbundabschnitte 18, 19 zwischen benachbarten Kunststoffabschnitten 21, 22 frei liegen. Vorzugsweise sind die Kunststoffabschnitte 21, 22 dabei mit konkaven Stirnflächen versehen und so geformt, dass sie zwischen einander den jeweiligen Wälzkörper 14 eingerastet und somit unverlierbar halten. Figur 1 veranschaulicht an dem Kunststoffabschnitt 22 ausgebildete Flügel 25-28, die sich an die benachbarten Kugeln 14, 15 anschmiegen und diese dadurch sichern. Zwei benachbarte Kunststoffabschnitte definieren jeweils zwischen einander Taschen, in die die jeweiligen Wälzkörper 13 - 16 ein- und ausgerastet werden können.

Bei einer Alternativkonstruktion, die in Figur 5 veranschaulicht ist, sind Kunststoffabschnitte 29 vorgesehen, die jeweils eine Tasche 30 zur rastenden Aufnahme eines Wälzkörpers, wie beispielsweise der Kugel 13, aufweisen. An seinen Stirnseiten kann der Kunststoffabschnitt 29 konkav gewölbt ausgebildet sein, um einer Anlagefläche 31 für einen weiteren Wälzkörper zu bilden. In einer entsprechenden Reihe mehrerer auf die Faserverbundabschnitte 18, 19 aufgereihten Körper 29, können die Kugeln oder sonstigen Wälzkörper dann abwechselnd in einer Tasche eines Abschnitts 29 und zwischen zwei solchen Abschnitte gehalten sein.

Alternativ ist es möglich, solche Kunststoffabschnitte 29 lückenlos oder mit kurzen Trennfugen aneinander angereiht auf die Faserverbundabschnitt 18, 19 aufzubringen, wobei dann jeder Kunststoffabschnitt 29 einen eigenen Wälzkörper hält. Weiter alternativ ist es möglich, auf die Faserverbundabschnitte 18, 19 einen streifenförmigen Kunststoffabschnitt aufzubringen, der eine Reihe von Taschen zur Aufnahme der Wälzkörper aufweist. Die Taschen können wieder in Anlehnung an die Ausführungsform nach Figur 1 die einzelnen Wälzkörper 13, 14, 15 usw. unverlierbar eingerastet halten.

In den Figuren 2 und 4 ist ein Ausführungsbeispiel eines Wälzlagers 10 zur drehenden Lagerung eines Maschinenteils veranschaulicht, bei dem der erfindungsgemäße Wälzkörperkäfig 17 ringförmig ausgebildet ist. Die Faserverbundabschnitte 18, 19 sind als geschlossene Ringe ausgebildet. Sie weisen wiederum Kunststoffabschnitte 20 - 24 auf, zwischen denen als Wälzkörper 13 - 16 z.B. Kugeln gelagert sind. Die Anzahl der Wälzkörper ist so festgelegt, dass sich ein vollständiger Kranz von Wälzkörpern um die innere Laufbahn 11 herum ergibt. Die Faserverbundabschnitte 18, 19 können als offene Ringe oder als geschlossene Ringe, d.h., endlose Ringe ausgebildet sein. Ansonsten gilt hinsichtlich der Ausbildung der Faserverbundabschnitte 18, 19, wie auch der Kunststoffabschnitt 20 - 24 die obige Beschreibung der Ausführungsmögichkeiten- und formen entsprechend.

Der erfindungsgemäße Wälzkörperkäfig 17 hat in Längsrichtung einen thermischen Ausdehnungskoeffizienten, der von den Faserverbundabschnitten 18, 19 bestimmt wird. Durch geeignete Faserwahl, beispielsweise eine Mischung aus Glasfasern und / oder Kohlenstofffasern, kann erreicht werden, dass der lineare Ausdehnungskoeffizient an den von Stahl angepasst wird. Die Laufbahnen 11, 12 sind vorzugsweise aus Stahl. Durch Angleichung der Ausdehnungskoeffizienten wird auch der Bau filigraner aber relativ großer Kugellager, beispielsweise zur Lagerung von Strickzylindern an Rundstrickmaschinen möglich, wobei die Kugeln dann in entsprechenden erfindungsgemäßen Wälzkörperkäfigen 17 gehalten sind. Das Lager kann sehr spielarm ausgebildet sein und Wälzkörper, beispielsweise Kugeln, aufweisen, deren Durchmesser im Verhältnis zum Lagerdurchmesser sehr klein ist, beispielsweise kleiner als 5%, 3% oder auch lediglich 1% desselben. Dennoch wird die Anpassung des thermischen Ausdehnungskoeffizienten des Wälzkörperkäfigs 17 an die thermischen Ausdehnungskoeffizienten der Laufbahnen 11, 12 ein verschleißarmer klemmungsfreier Lauf sichergestellt. Dies gilt auch im Hinblick auf Ausdehnung oder Schrumpfung in Folge von Feuchtigkeitseinflüssen. Die Faserverbundabschnitte können so ausgebildet sein, dass sie wenig feuchte bedingte Ausdehnung aufweisen.

Die Herstellung des Wälzkörperkäfigs 17 erfolgt vorzugsweise mindestens zweischrittig. In einem ersten Schritt werden die Faserverbundabschnitte 18, 19 bereitgestellt. In einem zweiten Schritt werden die Kunststoffabschnitte 21 - 24 und/oder 29 angebracht. Letzteres kann durch Anspritzen, also Urformen, oder bedarfsweise auch durch Montagemaßnahmen geschehen, zu denen Vorfertigen und Kleben und/oder Schweißen gehört.

Der erfindungsgemäße Wälzkörperkäfig besteht aus wenigstens zwei verschiedenen Materialien, nämlich zum einen einem Faserverbundmaterial und zum anderen aus einem Kunststoff, der keine oder andere Fasern enthält. Die Faserverbundabschnitte 18, 19 haben vorzugsweise Endlosfasern. Sofern die Kunststoffabschnitte Fasern enthalten, sind dies vorzugsweise Kurzfasern. Wenn die in den Faserverbundteilen untergebrachten Fasern abrasiv sind, sind solche Fasern in den Kunststoffabschnitten vorzugsweise nicht vorhanden.

Die erfindungsgemäßen Wälzkörperkäfige 17 sind für einen verschleißarmen Betrieb in einem weiten Temperaturbereich eingerichtet.

### Bezugszeichenliste:

- 10: Wälzlager
- 11, 12: Laufbahn
- 13 - 16: Wälzkörper
- 17: Wälzkörperkäfig
- 18, 19: Faserverbundabschnitte
- 19a: Fasern
- 20 - 24: Kunststoffabschnitte
- 19/21: Nahtfläche
- 25 - 28: Flügel
- 29: Kunststoffabschnitt / Körper
- 30: Tasche

## Patentansprüche

1. Wälzkörperkäfig (17) für ein Wälzlager (10):
mit mindestens einem Faserverbundabschnitt (18), der aus einem faserverstärkten Kunststoffmaterial besteht, und
mit mindestens einem Kunststoffabschnitt (20), der mit dem Faserverbundabschnitt (18) verbunden ist.

2. Wälzkörperkäfig nach Anspruch 1, **dadurch gekennzeichnet, dass** der Faserverbundabschnitt (18) Endlosfasern enthält.

3. Wälzkörperkäfig nach Anspruch 2, **dadurch gekennzeichnet, dass** sich die Endlosfasern in Richtung einer von Wälzkörpern (13, 14) des Wälzlagers (10) gebildeten Reihe erstrecken.

4. Wälzkörperkäfig nach Anspruch 1, **dadurch gekennzeichnet, dass** der Faserverbundabschnitt (18) mineralische Fasern oder Kohlenstofffasern enthält.

5. Wälzkörperkäfig nach Anspruch 1, **dadurch gekennzeichnet, dass** der Faserverbundabschnitt (18) Kunststofffasern enthält.

6. Wälzkörperkäfig nach Anspruch 1, **dadurch gekennzeichnet, dass** der Faserverbundabschnitt (18) als geschlossener Ring ausgebildet ist.

7. Wälzkörperkäfig nach Anspruch 1, **dadurch gekennzeichnet, dass** der Faserverbundabschnitt (18) eine Kunststoffmatrix aufweist.

8. Wälzkörperkäfig nach Anspruch 6 und 7, **dadurch gekennzeichnet, dass** die Kunststoffmatrix einen Kunststoff aufweist, der mit den Kunststofffasern identisch ist oder mit diesen eine stoffschlüssige Verbindung eingehen kann.

9. Wälzkörperkäfig nach Anspruch 1, **dadurch gekennzeichnet, dass** der Kunststoffabschnitt (20) an den Faserverbundabschnitt (18) angespritzt ist.

10. Wälzkörperkäfig nach Anspruch 1, **dadurch gekennzeichnet, dass** der Kunststoffabschnitt (20) den Faserverbundabschnitt (18) umgreift.

11. Wälzkörperkäfig nach Anspruch 1, **dadurch gekennzeichnet, dass** der Kunststoffabschnitt (20) mit dem Faserverbundabschnitt (18) stoffschlüssig verbunden ist.

12. Wälzkörperkäfig nach Anspruch 7, **dadurch gekennzeichnet, dass** der Kunststoffabschnitt (20) aus einem Kunststoff besteht, der mit dem Kunststoff der Kunststoffmatrix übereinstimmt oder mit diesem verschweißbar ist.

13. Wälzkörperkäfig nach Anspruch 1, **dadurch gekennzeichnet, dass** der Kunststoffabschnitt (20) faserfrei oder faserverstärkt ausgebildet ist.

14. Wälzkörperkäfig nach Anspruch 13, **dadurch gekennzeichnet, dass** Fasern des Kunststoffabschnitts (20) eine Orientierung aufweisen, die sich von der Orientierung des Faserverbundabschnitts (18) unterscheidet.

15. Verfahren zur Herstellung eines Wälzkörperkäfigs mit folgenden Schritte:
Bereitstellen mindestens eines Ausgangskörpers (18) aus einem Faserverbundmaterial,
Platzieren des Ausgangskörpers (18) in einer Form,
Zuführen weiteren Kunststoffmaterials in die Form zur Ausbildung von Kunststoffabschnitten (20) und zur Verbindung derselben mit dem Ausgangskörper (18).
